# EUROPEAN PATENT SPECIFICATION

(11) **EP 0 665 090 B1**
(45) Date of publication and mention of the grant of the patent: **02.01.2002**
(21) Application number: 95830021.2
(22) Date of filing: 26.01.1995
(51) Int. Cl.: B29C 33/44, B29C 45/44, B29C 45/33

(54) **A method of moulding and the relative mould for the production of gun cartridge wads**
Verfahren zum Spritzgiessen und entsprechende Form zur Herstellung von Patronenpfropfen für eine Schusswaffe
Méthode de moulage et moule pour la fabrication de bourre pour cartouches d'arme à feu

(30) Priority: 28.01.1994 IT BO940032
(43) Date of publication of application: 02.08.1995
(73) Proprietor: BASCHIERI & PELLAGRI S.P.A., I-40055 Marano di Castenaso (Bologna) (IT)
(72) Inventor: De Gregorio, Vito, I-40126 Bologna (IT)
(74) Representative: Lanzoni, Luciano

(56) References cited:
- EP-A- 0 100 422
- US-A- 4 889 480
- US-A- 4 906 104

## Description

The present invention relates to a method of moulding and the relative mould for the production of gun cartridge wads.

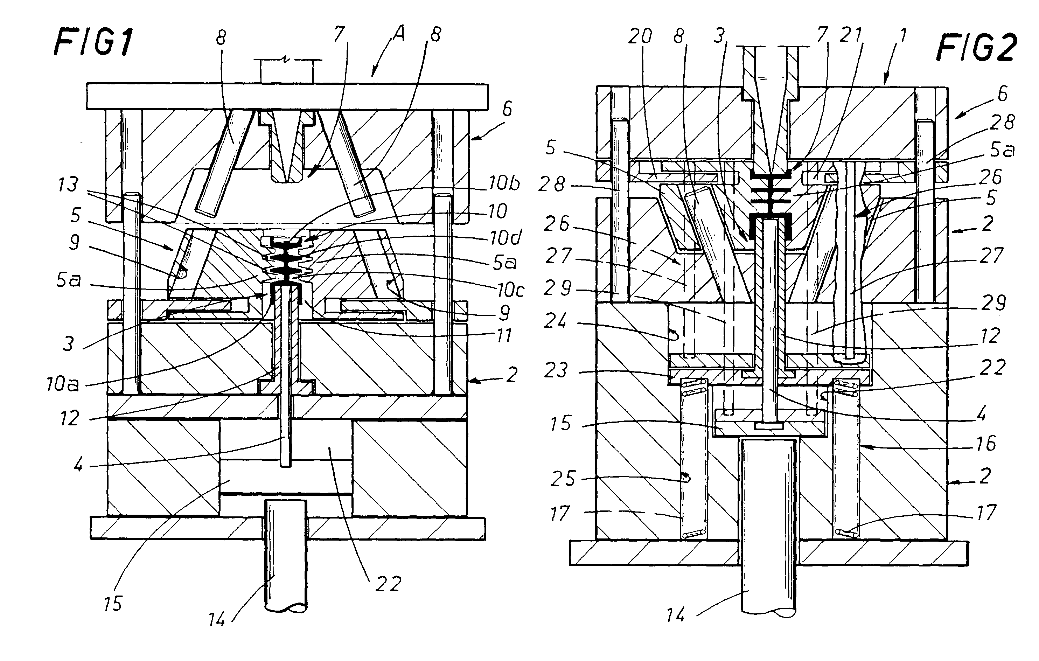

As is known, a gun cartridge consists of a cartridge case, with a base which contains the propellant charge, in which the powder, wad and shot are placed. The wad is placed between the powder and the shot and consists, as illustrated in figure 1, of a substantially cylindrical body, structured in various ways, with a cup 10a designed to hold the shot and a disk 10b connected by a central damping section 10c which is able to damp the recoil caused by the resistance met by the mass of shot within the gun barrel. To obtain the said effect, the said central section is normally manufactured using flexible radial or longitudinal elements 10d, such as tabs or arched longitudinal elements which give in an elastic fashion when subjected to bending or compression.

The wads 10 are obtained by injection moulding of a plastic material in recessed impressions in suitable moulds. Figure 1 illustrates a traditional mould, still in use, and which is indicated, in its entirety, by the letter A, to distinguish it from the present invention.

It consists of a first plate 2 and a parallel second plate 6, indicated respectively as the mobile part 2 and the fixed part 6. Plate 2 supports a die 3 and plate 6 a corresponding punch 7. Plates 2 and 6 can be attached to the corresponding parts of a press which, in turn, support them and move them, to bring the die 3 and punch 7 into the correct position for moulding. In the particular case of moulds used to obtain wads, reference shall be made both in the description and in the attached drawings to a single module of such moulds, able to produce a single wad. However, it is evident that a mould may have several modules, in series and/or side by side, so that upon completion of moulding more than one wad is obtained.

The die 3 and punch 7 define a cavity 11 which must be filled with material to be moulded in order to obtain the wall 10 when the mould is opened.

To produce the wads 10, moulds with a punch 7 and a die 3 are used. In this case, the mould normally consists of a column die 12, and a pair of coplanar plates, known as sliding closure cheeks 5 which, together with the punch 7 and column die 12, form the cavity 11.

On the side facing the cavity 11, the cheeks 5 have so-called fillets 5a, whose seats define the recessed impressions 13 of the cavity 11 itself, which shape the flexible elements 10d of the wad 10.

The cheeks 5 are held by the first plate 2 on opposite sides of the die 3 and punch 7 and have angled holes 9, into which, as the first and second plates 2 and 6 are moved towards one another, bars 8 set at an identical angle are inserted, fixed to the second plate 6 on opposite sides of the punch 7. The gradual insertion of the angled bars 8 in the respective holes 9 causes the cheeks 5 to move towards one another over a corresponding distance until, together with the die 3 and punch 7, which have in the meantime arrived at the desired distance for definition of the wad 10, the cavity 11 is defined.

For ejection of the wads 10, an ejector 4 is envisaged, which slides axially within the column die 12, supported and guided by the first plate 2 and activated by the opening mechanism of the press to which the mould is connected, and which intervenes at the end of the opening travel of the plates 2 and 6.

Figure 1 illustrates a control rod 14 of said mechanism, which acts upon the parts 15 which control the axial movement of the ejector 4. These control parts 15 consist of a plate, commonly known as the table, set at a right angle to the ejector 4, one end of said ejector being attached to it.

This type of mould has a serious disadvantage at the moment of opening following the injection stage. Plates 2 and 6 are moved away from one another, so that the moulded wad 10 is supported only at one end, more precisely, by the column die 12 only, which is, obviously, inserted in the cup 10a. The two cheeks 5 simultaneously move away from the wad 10, to release its flexible elements 10d. It is during this opening stage that the wad 10 is subjected to a lateral stress which bends it around its only point of support, represented by the column die 12. During this stage, the wad 10 is, in fact, still hot and easily sticks to the surfaces of the fillets 5a parallel to the direction of movement of the cheeks 5. Moreover, the semi-plastic state of the wad 10 means that a significant degree of friction is generated between the wad, or more particularly its flexible elements 10d, and the said surfaces of the fillets 5a.

The ideal condition, to avoid bending and deformation of the wad 10, would be-its simultaneous release from both cheeks 5, yet this is, obviously, practically impossible, and the moulded wad 10 remains attached, due to adhesive force or friction, to one of the cheeks 5. Since the wad is still soft, this causes permanent plastic deformation, making the wad unsuitable for use.

When a wad 10 remains attached to a fillet 5a, the machine must be stopped and the wad removed, at the risk of damaging the fillet 5a which, given its dimensions and function, is extremely delicate and equally expensive.

Moreover, if a wad deformed in this way is not removed, breakage of the mould is risked.

To reduce these disadvantages to a minimum, the said surfaces of the fillets 5a are made at an angle to the direction of movement of the cheeks 5, so that a draft is formed between them. Obviously, the larger the draft, the smaller the risk that the wad 10 will stick, due to adhesive force or friction, to the said surfaces of the fillets 5a. In fact, an increase in the draft reduces the adhesive force or friction between the wad 10 and the said surfaces in the direction of movement of the cheeks 5.

However, an increase in the draft means that the thickness of the wad 10 is increased. This, in turn, creates a further disadvantage, that is to say, it causes an increase in the total mass of the wad 10 and a variation in its dimensions with respect to the values calculated according to the ballistic features that the wad 10 should have.

An alternative way of reducing the initial disadvantage is to cool the wad 10 before opening the mould, so that the wad 10 material is brought to an almost solid state, in which less adhesive force and friction are generated.

This, however, complicates the structure of the mould A and increases the production time, with the consequent reduction in productivity and rise in costs.

In EP-A-100 422 it is disclosed a method of moulding for the production of wads for gun cartridges using injection moulds, according to the preamble of claim 1. This prior document furthermore discloses that upon completion of the injection and moulding stage and during opening of the mould, the moulded wad is held stably and at both ends, at one end by the die and at the opposite end by the punch, at least for the time necessary to move the cheeks away from the moulded wad until it is completely released.

The object of the present invention is to allow the production of wads without necessitating compromises between qualitative and ballistic requirements, the draft and productivity.

The present invention, as defined in the claims, resolves the problem with a method of moulding and relative mould for the production of wads for gun cartridges, according to claim 1.

The present invention will now be described in detail, by way of example, with the aid of the accompanying drawings, which illustrate an example of an embodiment, in which:
- figure 1 is a schematic cross-section of a mould of the known type for moulding wads for gun cartridges, in its configuration for opening and ejection of the moulded wads;
- figures 2 to 4 are schematic cross-sections of a preferred embodiment of the mould according to the present invention, in three distinct configurations: moulding, moving away of the cheeks, and opening and ejection of the wads.

With reference to figures 2 to 4 of the accompanying drawings, the method according to the present invention intends to produce wads for gun cartridges using a mould, denoted in its entirety by 1, consisting, at least, of a die 3 and a punch 7, set opposite one another, and a pair of cheeks 5 also set opposite one another. The die 3 and punch 7 are able to move towards or away from one another, and the cheeks 5 are able to move towards or away from one another in the same plane along an axis which is transversal to the direction of movement of the die 3 and punch 7. The die 3, punch 7 and cheeks 5 define at least one cavity 11, which must be filled in order to produce the wad 10. The die 3 and punch 7 are supported by a pair of respective parallel bodies or plates, 2 and 6, the first, indicated by 2, able to move parallel to its own axis, and the second, indicated by 6, being fixed. The cheeks 5 are fitted between the mobile 2 and fixed 6 plates.

The present method envisages that, upon completion of the injection and moulding stage, and during the opening of the mould 1, the moulded wad 10 is held stably at both ends, at one end by the die 3, and at the opposite end by the punch 7, at least for the time necessary for the cheeks 5 to move away from the moulded wad 10 until it is completely released.

Moreover, this method envisages that, upon completion of the injection and moulding stage, and during the opening of the mould 1, during which time the mobile plate 2 is moved away from the fixed plate 6, the die 3 slides relative to the mobile plate 2. More precisely, the mobile plate 2 is moved away from the fixed plate 6 and the die 3 is kept in the configuration held during the entire injection and moulding stage for production of the wad 10, thus obtaining the afore-mentioned relative movement between the die 3 and mobile plate 2.

The said position of the die 3 is defined by reference stops 26 which consist, as illustrated in the accompanying drawings, of pins 27. The said position is maintained, during movement of the mobile plate 2, by respective positioning means 16, described in more detail below.

When using the method described above, and by observing the accompanying drawings 2 to 4, it can be noted that the die 3 is supported by the lower, mobile plate 2, and the punch 7 is supported by the upper, fixed plate 6.

Plates 2 and 6 are parallel and are attached to the moving parts (not illustrated) of a press, which move them towards or away from one another. Plates 2 and 6 are both guided by guide rods 28 which are set perpendicular to them.

Between plates 2 and 6 are the closure cheeks 5, coplanar to one another and positioned on opposite sides of the die 3 and punch 7. On their opposing sides, the cheeks 5 have so-called fillets 5a, with recessed impressions 13 which, together with the die 3 and punch 7, define the cavity 11 into which the material to be moulded will be injected to obtain the wad 10. In figure 2, the cheeks 5 are supported by the fixed plate 6 by means of guide rods 20 parallel to the fixed plate 6 and the respective seats 21 of the cheeks 5. The rods 20 can slide axially within the respective seats 21, thus allowing the cheeks 5 to move towards or away from one another in the same plane.

The cheeks 5 have holes or seats 9, set at an angle to the rods 20, into which bars 8 at an identical angle and fixed to the mobile plate 2 can slide. The angle and the position of the bars 8 and the respective holes or seats 9 are such that when the plates 2 and 6 are moved towards or away from one another, the bars 8 are respectively gradually inserted in or removed from the respective seats 9, and the cheeks 5 are respectively gradually moved towards or away from one another.

In the case of wads 10, the mould 1 consists of several modules, each of which consists of a die 3, a respective punch 7 and a section of the cheeks 5. The following description refers to each module, regardless of the number of modules which make up the mould 1.

In this case, the die 3 consists of a column die 12, which is traversed axially by an ejector 4. The ejector 4 slides axially to the column die 12 and is fixed, at its bottom end, to an ejector plate or table 15. The ejector table 15 is housed in a respective seat 22 in plate 2, within which it can move, parallel to its own position, when activated by a control rod 14 which is part of or connected to axially mobile parts (not illustrated) of the press which supports plates 2 and 6 and is not illustrated.

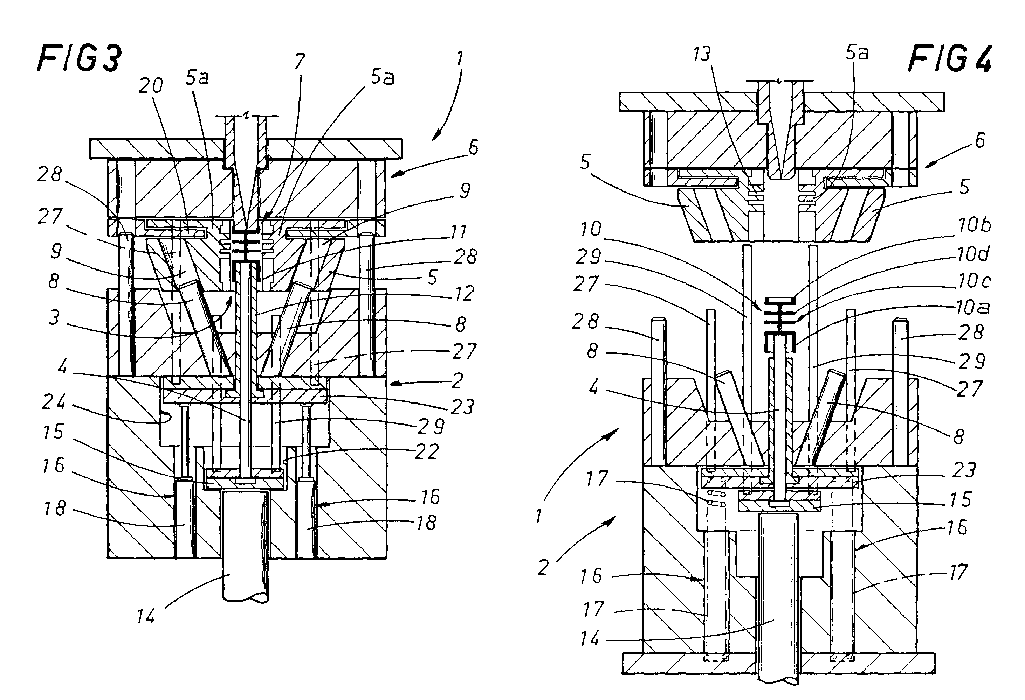

The column die 12 can move axially to the mobile plate 2 and, since, as we have already said, more than one column dies 12 are envisaged, their bottom edges are fixed to a connecting plate 23, housed in a seat 24 in plate 2. The connecting plate 23 can move parallel to its own position within the seat 24. The positioning means 16 act upon the plate 23. With reference to figure 2, it can be seen that, during the injection and moulding stage, the column die 12 is held in its correct operating position with respect to the punch 7 by the mobile plate 2, which pushes the base of the seat 24 against the connecting plate 23. The position of the column die 12 is clearly defined by the pins 27, whose bottom ends are fixed to the connecting plate 23 and top ends touch against the fixed plate 6. By observing figure 3 it can be seen that, in the moment in which the mobile plate 2 is moved away from the fixed plate 6, the position previously adopted by the column die 12 is maintained by the afore-mentioned positioning means 16. In the embodiment illustrated in figure 2, the positioning means 16 consist of springs 17 housed in seats 25 in the mobile plate 2, whilst in the embodiment shown in figure 3, these means are linear actuators 18.

Observation of figures 2 and 3 clearly shows that during the downward movement of the mobile plate 2 upon completion of the injection and moulding stage, the cheeks 5 move, completely releasing the wad 10, which is held at both ends during this movement of the cheeks 5, at one end by the column die 12, and at the other end by the punch 7. In this way, the fillets 5a can have recessed impressions 13 made with undercuts, without damaging the wad 10 as the cheeks 5 are moved away.

When the angled bars 8 begin to exit the respective seats 9 and the top of the connecting plate 23 makes contact with its seat 24, the column die 12 is moved away from the punch 7, then, upon completion, the upward movement of the control rod 14 is provoked, with the consequent upward movement of the ejector 4 and release of the moulded wad 10 from the column die 12 (see figure 4). In figure 2, it can be seen that the bottom ends of the pins 29 are attached to the ejector table 15. The top ends of said pins are designed to touch against the fixed plate 6 during the injection and moulding stage, to correctly define the axial position of the ejector 4 with respect to the column die 12.

There are many advantages, for example, products of superior quality are obtained and the amount of material used is reduced, since there is no bending or permanent plastic deformation of the wad 10 caused by the removal of the cheeks 5, because the wad 10 itself is held at both ends. For the same reason, the wad 10 can be completely released without waiting for it to cool and solidify, thus reducing production times and improving productivity.

Moreover, the certainty that the wads 10 do not stick to the fillets 5a allows drastic reductions in maintenance costs for the moulds 1. No less important is the possibility of producing wads 10 of limited thickness without a draft but, in contrast, with undercuts in the fillets 5a.

## Claims

1. A method of moulding for the production of wads for gun cartridges using injection moulds consisting of, at least, a movable die (3) and a punch (7) set opposite one another and supported by respective parallel bodies or plates (2 and 6), the first (2) mobile and the other (6) fixed, which can be moved towards or away from one another, and a pair of closure cheeks (5) set opposite one another between the two said plates (2 and 6) which can be moved towards or away from one another in the same plane, in a direction transversal to the direction of movement of the said die (3) and punch (7); said die (3), punch (7) and cheeks (5) defining, when the mould is closed, at least one cavity (11) to be filled for production of the wad (10), **characterized in that** it envisages that upon completion of the injection and moulding stage and during opening of the mould (1), the moulded wad (10) is held stably and at both ends, at one end by the die (3) and at the opposite end by the punch (7), such that the position of the movable die (3,12), as defined in the moulding stage by reference stops (26,27) connected to said movable die and abutting the fixed plate (6), is maintained unaltered by positioning means (16) provided on the mobile plate (2), at least for the time necessary to move the cheeks (5) away from the moulded wad (10) until it is completely released.

2. A mould for the production of wads for gun cartridges comprising: a movable die (3) and a punch (7) set opposite one another and supported by respective parallel bodies or plates (2 and 6), the first (2) mobile and the other (6) fixed, which are movable towards or away from one another, and a pair of closure cheeks (5) set opposite one another between the two said plates (2 and 6) which are movable towards or away from one another in the same plane, in a direction transversal to the direction of movement of the said die (3) and punch (7); said die (3), punch (7) and cheeks (5) defining, when the mould is closed, at least one cavity (11) to be filled for production of the wad (10), wherein upon completion of the injection and moulding stage and during opening of the mould (1), the moulded wad (10) is held stably and at both ends, at one end by the die (3) and at the opposite end by the punch (7), at' least for the time necessary to move the cheeks (5) away from the moulded wad (10) until it is completely released,
**characterized in that** the said die (3) consists of a column die (12) which slides relative to the said mobile plate (2) which supports it in its injection and moulding configuration, said mobile plate having, at its side opposite that which faces the punch, positioning means (16) designed to hold it in the said injection and moulding configuration, defined by reference stops (26) connected to said movable die (3,12) and abutting the fixed plate (6), while the mobile plate (2) is moved away from the fixed plate (6).

3. The mould as defined in claim 2, **characterized in that** the said cheeks (5) are supported by the fixed plate (6).

4. The mould as defined in claim 2, **characterized in that** the said positioning means (16) consist of springs (17) positioned between the die (3) and the mobile plate (2), the springs being designed to extend as the mobile plate (2) is moved away from the fixed plate (6) and as the cheeks (5) are moved away from one another, so as to hold the die (3) in its injection and moulding configuration.

5. The mould as defined in claim 4, **characterized in that** the said die (3) consists of a column die (12) which slides axially with respect to the mobile plate (2) and is attached at one end to a connecting plate (23) which is housed in a seat (24) in the mobile plate (2), said springs (17) being positioned between the connecting plate (23) and the bottom of a seat (25) in the mobile plate (2); one end of the pins (27) which form the reference stops (26) being attached to the connecting plate (23), the free ends of the pins (27) being held against the fixed plate (6) by the base of the seat (24) which makes contact with the connecting plate (23) during the injection and moulding stage, the pins being held against the fixed plate by the force of the springs (17) while the mobile plate (2) is moved away from the fixed plate (6) and as the cheeks (5) are moved away from one another.

6. The mould as defined in claim 2, **characterized in that** the said positioning means (16) consist of linear actuators (18), designed to extend as the mobile plate (2) is moved away from the fixed plate (6) and as the cheeks (5) are moved away from one another, thus holding the die (3) in its injection and moulding configuration.

## Patentansprüche

1. Verfahren zum Spritzgiessen zur Herstellung von Patronenpfropfen für eine Schusswaffe unter Verwendung von Spritzgussformen, bestehend aus wenigstens einer beweglichen Matrize (3) und einem Dorn (7), die sich einander gegenüberliegend angeordnet sind und von jeweiligen parallelen Körpern oder Platten (2 und 6) getragen werden, die erste (2) beweglich und die zweite (6) feststehend, welche aufeinander zu bewegt oder voneinander entfernt werden können, sowie ein Paar von Schliessbacken (5), die sich einander gegenüberliegend zwischen den beiden genannten Platten (2 und 6) angeordnet sind und sich auf der gleichen Ebene aufeinander zu oder voneinander fort bewegen können, und zwar in einer Richtung quer zu der Bewegungsrichtung der genannten Matrize (3) und des Dorns (7); wobei die genannte Matrize (3), der Dorn (7) und die Schliessbacken (5), wenn die Form geschlossen ist, wenigstens einen Hohlraum (11) beschreiben, der zur Herstellung des Pfropfens (10) zu füllen ist, **dadurch gekennzeichnet, dass** nach der Vervollständigung der Spritz- und Formphase und während des Öffhens der Form (1) vorgesehen ist, dass der geformte Pfropfen (10) stabil an beiden Enden gehalten wird, und zwar an einem Ende durch die Matrize (3) und an dem entgegengesetzten Ende durch den Dorn (7), so dass die Position der beweglichen Matrize (3, 12), so wie sie in der Spritzgiessphase durch Bezugsanschläge (26, 27) beschrieben ist, letztere befestigt an der genannten beweglichen Matrize (3) und gegen die feststehende Platte (6) stossend, , unverändert durch Positioniermittel (16) gehalten wird, die an der beweglichen Platte (2) vorgesehen sind, wenigstens für die notwendige Dauer, um die Schliessbacken (5) von dem geformten Pfropfen (10) zu entfernen, bis dieser vollkommen freigegeben ist.

2. Form zur Herstellung von Patronenpfropfen für eine Schusswaffe, enthaltend: eine bewegliche Matrize (3) und einen Dorn (7), die sich einander gegenüberliegend angeordnet sind und von jeweiligen parallelen Körpern oder Platten (2 und 6) getragen werden, die erste (2) beweglich und die zweite (6) feststehend, welche aufeinander zu und voneinander fort beweglich sind, sowie ein Paar von Schliessbacken (5), die sich einander gegenüberliegend zwischen den beiden genannten Platten (2 und 6) angeordnet sind und auf der gleichen Ebene aufeinander zu oder voneinander fort beweglich sind, und zwar in einer Richtung quer zu der Bewegungsrichtung der genannten Matrize (3) und des Dorns (7); wobei die genannte Matrize (3), der Dorn (7) und die Schliessbacken (5), wenn die Form geschlossen ist, wenigstens einen Hohlraum (11) beschreiben, der zur Herstellung des Pfropfens (10) zu füllen ist, bei welcher nach der Vervollständigung der Spritz- und Formphase und während des Öffnens der Form (1) der geformte Pfropfen (10) stabil an beiden Enden gehalten wird, und zwar an einem Ende durch die Matrize (3) und an dem entgegengesetzten Ende durch den Dorn (7), wenigstens für die notwendige Dauer, um die Schliessbacken (5) von dem geformten Pfropfen (10) zu entfernten, bis dieser vollkommen freigegeben ist, **dadurch gekennzeichnet, dass** die genannte Matrize (3) aus einer Säulenmatrize (12) besteht, die im Verhältnis zu der genannten beweglichen Platte (2) gleitet, welche sie in ihrer Spritz- und Formdarstellung trägt, wobei die genannte bewegliche Platte an ihrer entgegengesetzten Seite zu der, die dem Dorn zugewandt ist, Positioniermittel (16) aufweist, dazu bestimmt, sie in der genannten Spritz- und Formdarstellung zu halten, und bestehend aus Bezugsanschlägen (26), die an der genannten bewegliche Matrize (3, 12) befestigt sind und gegen die feststehende Platte (6) stossen, während die bewegliche Platte (2) von der feststehenden Platte (6) entfernt wird.

3. Form nach Patentanspruch 2, **dadurch gekennzeichnet, dass** die genannten Schliessbacken (5) von der feststehenden Platte (6) getragen werden.

4. Form nach Patentanspruch 2, **dadurch gekennzeichnet, dass** die genannten Positioniermittel (16) aus Federn (17) bestehen, die zwischen der Matrize (3) und der beweglichen Platte (2) positioniert sind, wobei die Federn dazu bestimmt sind sich auszudehnen, wenn die bewegliche Platte (2) von der feststehenden Platte (6) fort bewegt wird, und wenn sich die Schliessbacken (5) voneinander entfernen, so dass die Matrize (3) in ihrer Spritz- und Formdarstellung gehalten wird.

5. Form nach Patentanspruch 4, **dadurch gekennzeichnet, dass** die genannte Matrize (3) aus einer Säulenmatrize (12) besteht, welche axial im Verhältnis zu der beweglichen Platte (2) gleitet und an einem Ende an eine Verbindungsplatte (23) angeschlossen ist, welche in einem in die bewegliche Platte (2) eingearbeiteten Sitz (24) liegt, wobei die genannten Federn (17) zwischen der Verbindungsplatte (23) und dem Boden eines Sitzes (25) in der beweglichen Platte (2) angeordnet sind; wobei ein Ende der die Bezugsanschläge (26) bildenden Zapfen (27) an die Verbindungsplatte (23) angeschlossen ist und die freien Enden der Zapfen (27) durch die Basis des Sitzes (24) an der feststehenden Platte (6) gehalten werden, welcher während der Spritz- und Formphase Kontakt mit der Verbindungsplatte (23) hat, und wobei die Zapfen durch die Kraft der Federn (17) an der feststehenden Platte (6) gehalten werden, während die bewegliche Platte (2) von der feststehenden Platte (6) fort bewegt wird und sich die Schliessbacken (5) voneinander entfernen.

6. Form nach Patentanspruch 2, **dadurch gekennzeichnet, dass** die genannten Positioniermittel (16) aus linearen Trieben (18) bestehen, dazu bestimmt sich auszudehnen, wenn die bewegliche Platte (2) von der feststehenden Platte (6) fort bewegt wird und sich die Schliessbacken (5) voneinander entfernen, so dass die Matrize (3) in ihrer Spritz- und Formdarstellung gehalten wird.

## Revendications

1. Une méthode de moulage pour la fabrication de bourre pour cartouches d'arme à feu utilisant des moules à injection consistant, au moins, en une matrice mobile (3) et un poinçon (7) placés l'un en face de l'autre et supportés par des corps ou plaques parallèles respectives (2 et 6), la première (2) mobile et l'autre (6) fixe, qui peuvent se rapprocher ou s'éloigner l'une de l'autre, et en une paire de joues de fermeture (5) placées l'une en face de l'autre entre lesdites deux plaques (2 et 6) et qui peuvent se rapprocher ou s'éloigner l'une de l'autre dans le même plan, dans une direction transversale à la direction de déplacement de la matrice (3) et du poinçon (7) susmentionnés ; ladite matrice (3), ledit poinçon (7) et lesdites joues (5) définissant, quand le moule est fermé, au moins une cavité (11) destinée à être remplie pour la fabrication de la bourre (10), **caractérisée en ce qu'**elle prévoit, à la fin de la phase d'injection et de moulage et lors de l'ouverture du moule (1), que la bourre (10) moulée soit maintenue de manière stable aux deux extrémités, à une extrémité par la matrice (3) et à l'extrémité opposée par le poinçon (7), de manière à ce que la position de la matrice mobile (3, 12), comme définie dans la phase de moulage par des butées de référence (26, 27) reliées à ladite matrice mobile et servant de butée à la plaque fixe (6), soit maintenue inchangée par des moyens de positionnement (16) prévus sur la plaque mobile (2), au moins pendant le temps nécessaire à l'éloignement des joues (5) de la bourre moulée (10) jusqu'à ce que cette dernière soit complètement libérée.

2. Un moule pour la fabrication de bourre pour cartouches d'arme à feu comprenant : une matrice mobile (3) et un poinçon (7) placés l'un en face de l'autre et supportés par des corps ou plaques parallèles respectives (2 et 6), la première (2) mobile et l'autre (6) fixe, qui peuvent se rapprocher ou s'éloigner l'une de l'autre, et une paire de joues de fermeture (5) placées l'une en face de l'autre entre lesdites deux plaques (2 et 6) et qui peuvent se rapprocher ou s'éloigner l'une de l'autre dans le même plan, dans une direction transversale à la direction de déplacement de la matrice (3) et du poinçon (7) susmentionnés ; ladite matrice (3), ledit poinçon (7) et lesdites joues (5) définissant, quand le moule est fermé, au moins une cavité (11) destinée à être remplie pour la fabrication de la bourre (10), où à la fin de la phase d'injection et de moulage et lors de l'ouverture du moule (1), la bourre moulée (10) est maintenue de manière stable aux deux extrémités, à une extrémité par la matrice (3) et à l'extrémité opposée par le poinçon (7), au moins pendant le temps nécessaire à l'éloignement des joues (5) de la bourre moulée (10) jusqu'à ce que cette dernière soit complètement libérée, **caractérisé en ce que** ladite matrice (3) consiste en une matrice à colonne (12) qui coulisse par rapport à ladite plaque mobile (2) qui la supporte dans sa configuration d'injection et de moulage, ladite plaque mobile ayant, du côté opposé à celui qui fait face au poinçon, des moyens de positionnement (16) destinés à la maintenir dans ladite configuration d'injection et de moulage, définie par des butées de référence (26) reliées à ladite matrice mobile (3, 12) et servant de butée à la plaque fixe (6), lorsque la plaque mobile (2) s'éloigne de la plaque fixe (6).

3. Le moule selon la revendication 2, **caractérisé en ce que** lesdites joues (5) sont supportées par la plaque fixe (6).

4. Le moule selon la revendication 2, **caractérisé en ce que** lesdits moyens de positionnement (16) consistent en des ressorts (17) placés entre la matrice (3) et la plaque mobile (2), ces ressorts étant destinés à s'étendre lorsque la plaque mobile (2) s'éloigne de la plaque fixe (6) et lorsque les joues (5) s'éloignent l'une de l'autre, de manière à maintenir la matrice (3) dans sa configuration d'injection et de moulage.

5. Le moule selon la revendication 4, **caractérisé en ce que** ladite matrice (3) consiste en une matrice à colonne (12) qui coulisse axialement par rapport à la plaque mobile (2) et est fixée à une extrémité à une plaque de liaison (23) qui est logée dans un logement (24) réalisé dans la plaque mobile (2), lesdits ressorts (17) étant placés entre la plaque de liaison (23) et le fond d'un logement (25) réalisé dans la plaque mobile (2) ; une extrémité des goupilles (27) qui définissent les butées de référence (26) étant fixée à la plaque de liaison (23), l'extrémité libre des goupilles (27) étant maintenue contre la plaque fixe (6) par le fond du logement (24) qui vient en contact avec la plaque de liaison (23) pendant la phase d'injection et de moulage, les goupilles étant maintenues contre la plaque fixe par la force des ressorts (17) lorsque la plaque mobile (2) s'éloigne de la plaque fixe (6) et lorsque les joues (5) s'éloignent l'une de l'autre.

6. Le moule selon la revendication 2, **caractérisé en ce que** lesdits moyens de positionnement (16) consistent en des actionneurs linéaires (18) destinés à s'étendre lorsque la plaque mobile (2) s'éloigne de la plaque fixe (6) et lorsque les joues (5) s'éloignent l'une de l'autre, maintenant ainsi la matrice (3) dans sa configuration d'injection et de moulage.
